# EUROPÄISCHE PATENTANMELDUNG

(11) **EP 2 390 536 A1**
(43) Veröffentlichungstag der Anmeldung: **30.11.2011**
(21) Anmeldenummer: 11466012.9
(22) Anmeldetag: 27.05.2011
(51) Int. Cl.: F16J 15/08

(54) **Dichtung mit asymmetrischem Dichtprofil**

(30) Priorität: 28.05.2010 CZ 20100425
(71) Anmelder: Skoda Auto A.S., 293 60 Mladá Boleslav (CZ)
(72) Erfinder: Vrana, Ales, 29406 Brezno (CZ); Sykora, Jan, 41801 Bilina (CZ); Milan, Cerny, 29301 Mladá Boleslav (CZ); Miroslav, Stepán, 46822 Skuhrov (CZ)

(57) **Zusammenfassung**

Die Lösung betrifft eine Metalldichtung mit asymmetrischem Dichtprofil, die für einen gasdichten Verschluss einer Spalte oder Fuge zwischen zwei zu verbindenden Bauteilen bestimmt ist und aus einem oberen und unteren Dichtteil (5, 6) besteht, die nicht immer gleiche Stärke haben müssen. In der Dichtung (3) sind durchgehende Öffnungen (4) ausgebildet, wo am Rande jeder Öffnung (4) ein asymmetrisches Dichtprofil (8) ausgestaltet ist, das durch ein Ober- und Unterteil (9, 10) gebildet wird. Beide Teile (9, 10) sind gegeneinander versetzt, wo der Versatz (O) einen Wert von (1,6 - 4) T_{D}hat, wobei die Höhe sowie Länge der einzelnen Teile des asymmetrischen Dichtprofils (8) so gewählt werden, damit eine höchstmögliche Dichtheit zwischen den zu verbindenden Bauteilen gewährleistet wird.

## Beschreibung

### Technisches Gebiet

Die Erfindung betrifft eine Metalldichtung mit asymmetrischem Dichtprofil, die für einen gasdichten Verschluss einer Spalte oder Fuge zwischen zwei zu verbindenden Bauteilen dient.

### Bisheriger Stand der Technik

Derzeit werden allgemein bei Maschinenanlagen für die Abdichtung des Übergangs zwischen einzelnen Bauteilen eine oder mehrere Schichten von Metallmaterial verwendet, das mit offenem oder geschlossenem Dichtprofil beendet ist.

Die Dichtheit ergibt sich in diesem Fall aus der Fähigkeit der Dichtung nach dem Zusammendrücken und folgendem Loslassen die möglichst ursprünglichste Form einzunehmen.

Werden zwei oder mehrere Schichten verwendet, wird die Dichtheit verbessert, d.h. die Fähigkeit der Dichtung die Spalte zwischen den Bauteilen auch bei Wärmeänderungen und mechanischer Belastung auszufüllen.

Bei mehrschichtiger Ausführung der Dichtung werden bei bekannten Lösungen einzelne Bleche so verwendet, dass im Zusammenbau der Dichtungen ein symmetrisches Dichtprofil gebildet wird. Der Nachteil liegt darin, dass dann die einzelnen Schichten ohne Einwirkung auf die umliegenden Schichten selbständig funktionieren oder sich negativ beeinflussen. Die Dichtheit erhöht sich nicht proportional mit der Anzahl der verwendeten Schichten.

Bisher bekannte Ausführungen der Dichtung mit symmetrischem Dichtprofil erfüllen die Anforderungen auf optimale Abdichtung des Raumes zwischen den zu verbindenden Teilen und zwar insbesondere bei anspruchsvollen Betriebsbedingungen, wie z.B. hohe Temperaturen, wechselnde Druckverhältnisse usw., nicht vollkommen.

### Darstellung der Erfindung

Die Aufgabe wird durch die erfindungsgemäße Dichtung mit asymmetrischem Dichtprofil gelöst, welche durch einen oberen Dichtungsteil und einen unteren Dichtungsteil gebildet wird, wobei in der eigentlichen Dichtung durchgehende Öffnungen ausgebildet sind, an deren Rändern ein asymmetrisches Dichtprofil ausgestaltet ist, das einen Ober- und einen Unterteil umfasst, wo der Oberteil einen schrägen langen Abschnitt und einen schrägen kurzen Abschnitt und der Unterteil einen schrägen Abschnitt und horizontalen Abschnitt aufweist, wobei die Stärke des oberen und unteren Dichtteils, als T_{H} und T_{D} definiert, nicht immer den gleichen Wert haben müssen.

Um eine maximale Dichtwirkung zu erreichen ist das asymmetrische Dichtprofil so angeordnet, dass sein Oberteil gegenüber dem Unterteil um den Wert O gleich (1,6 - 4) T_{D} versetzt angebracht ist, wo die Länge des Oberteils D_{H1} dem Wert (12 - 20) T_{H} und die Länge des Unterteils D_{D1} dem Wert (12 - 18,4) T_{D} entspricht, wobei die Länge des schrägen kurzen Abschnitts D_{H2} im Intervall (5,6 - 7,6) T_{H} und die Länge D_{D2} des horizontalen Abschnitts im Intervall (4,8 - 6,8) T_{D} liegt. Die Höhe des Oberteils des asymmetrischen Profils V_{H1} liegt im Intervall (1,6 - 3,6) T_{H} und die Höhe des Unterteils des asymmetrischen Dichtprofils V_{D} liegt im Intervall (1,6-3,6) T_{D,} wobei die Höhe des kurzen schrägen Abschnitts V_{H2} dem Wert (0,6 - 1,4) T_{H} entspricht.

Um optimale Dichtverhältnisse zu erreichen, kann die Dichtung mit asymmetrischem Dichtprofil ein Distanzglied mit einer Stärke von T_{z}, die dem Wert (0-7,2) T_{H} entspricht, enthalten, wobei das Distanzglied in der Dichtung so angeordnet ist, dass der Versatz des Distanzgliedes O_{z} gegenüber dem oberen Teil des asymmetrischen Dichtprofils einen Wert von (0 ― 10) T_{H} hat.

### Übersicht der Figuren der Zeichnungen

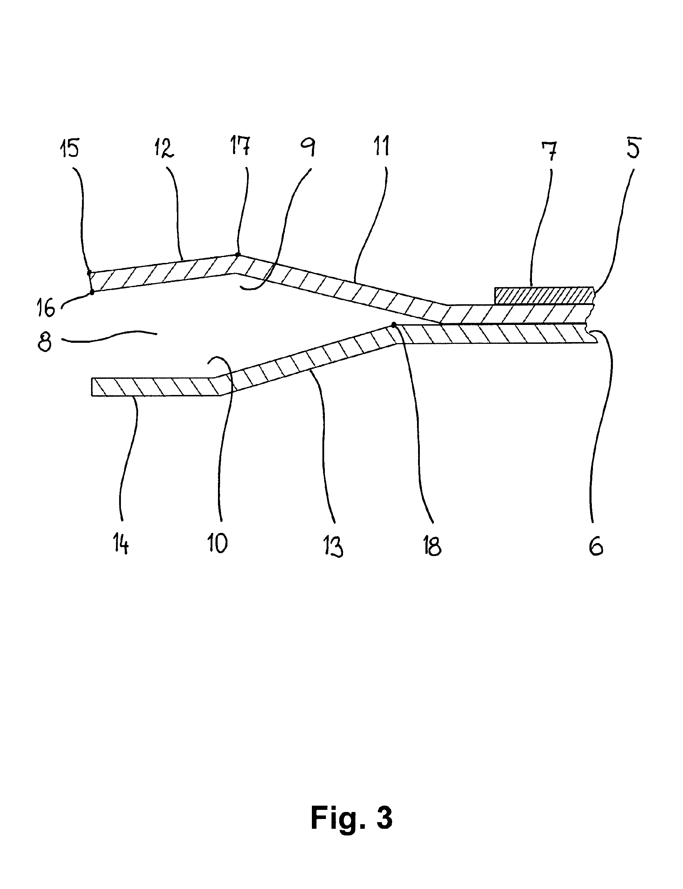

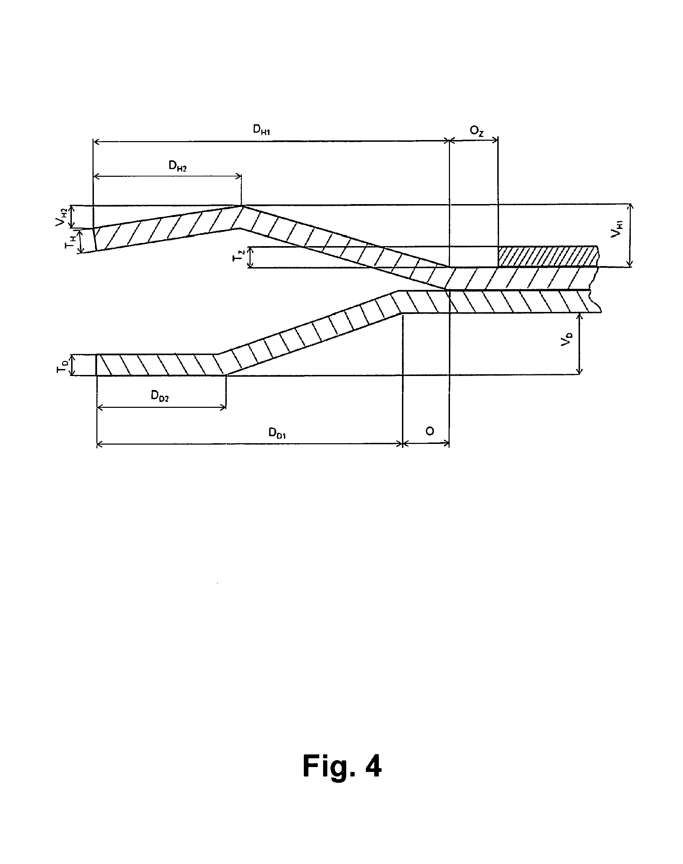

Die Erfindung wird näher anhand der Ausführungsbeispiele gemäß den beigefügten Zeichnungen erläutert, in denen die Fig. 1 schematisch den Zusammenbau der Teile, zwischen denen die Dichtung mit asymmetrischem Dichtprofil angeordnet ist, die Fig. 2 die Dichtung mit asymmetrischem Dichtprofil, die Fig. 3 das asymmetrische Dichtprofil im Schnitt und die Fig. 4 den Schnitt des asymmetrischen Dichtprofils mit angegebenen Längs- und Höhenwerten darstellt.

### Ausführungsbeispiel der Erfindung

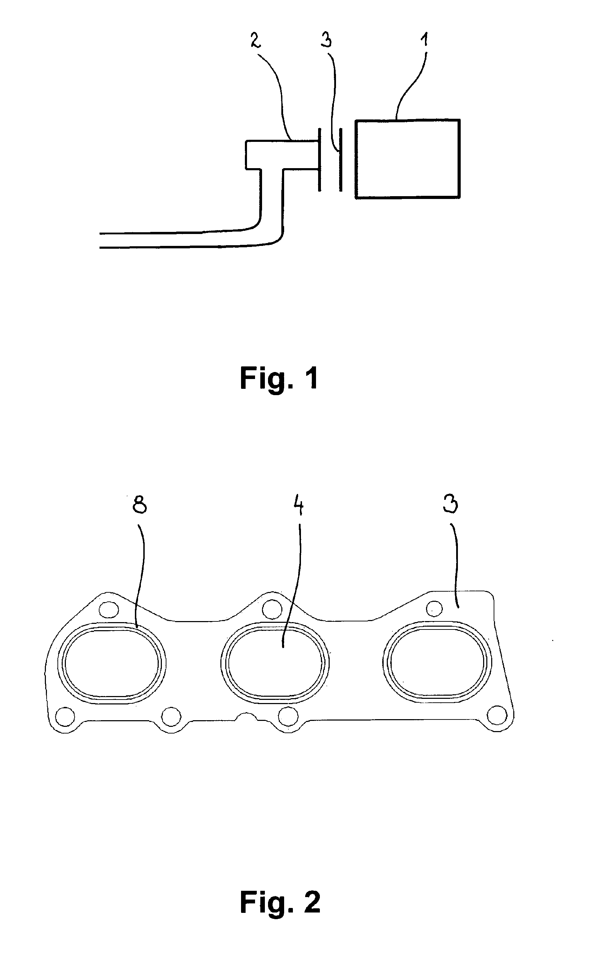

Die Metalldichtung mit asymmetrischem Dichtprofil ist für einen gasdichten Verschluss einer Spalte oder Fuge zwischen zwei zu verbindenden Bauteilen bestimmt. Weiter angeführte Beschreibung beschreibt dann die zwischen der Abgasanlage 2 und dem Zylinderkopf 1 des Verbrennungsmotors angeordnete Dichtung 3, wie schematisch in Fig. 1 dargestellt ist. Diese wird durch einen oberen Dichtteil 5 und unteren Dichtteil 6 gebildet, deren Stärke mit den Werten T_{H} und T_{D} definiert ist und die nicht gleich werden müssen. Wie aus der Fig. 2 hervorgeht, sind in der Dichtung 3 durchgehende Öffnungen 4 für die nicht abgebildeten Abgasröhren am Zylinderkopf des Verbrennungsmotors 1 ausgebildet. Zur eigentlichen Abdichtung des Raumes zwischen der Abgasanlage 2 und dem Zylinderkopf des Verbrennungsmotors 1 ist am Rande der zur durchgehenden Öffnung 4 anliegenden Dichtung 3 ein asymmetrisches Dichtprofil 8 ausgestaltet. Dieses umfasst einen Oberteil 9 und einen Unterteil 10. Der Oberteil 9 wird durch einen schrägen langen Abschnitt 11 und einen schrägen kurzen Abschnitt 12 gebildet. Der Unterteil 10 wird durch einen schrägen Abschnitt 13 und einen horizontalen Abschnitt 14 gebildet. Die Länge des Oberteils D_{H1}des asymmetrischen Dichtprofils 8 liegt im Intervall (12 - 20) vielfaches der Stärke T_{H}des Dichtteils, wobei die Länge des schrägen kurzen Abschnitts D_{H2}dem Wert (5,6 - 7,6) T_{H}entspricht. Die Höhe des Oberteils V_{H1}beträgt (1,6-3,6) T_{H}, wo die Höhe des kurzen schrägen Abschnitts V_{H2}dem Wert (0,6 - 1,4) T_{H}entspricht. Die Länge des Unterteils D_{D1}des asymmetrischen Dichtprofils 8 liegt im Intervall (12 - 18,4) I_{D},wo die Länge des horizontalen Abschnitts D_{D2}(4,8 - 6,8) T_{D}beträgt. Die Höhe des Unterteils V_{D}beträgt (1,6 - 3,6) T_{D}Der Unterteil des asymmetrischen Dichtprofils 10 ist gegenüber dem Oberteil des asymmetrischen Dichtprofils 9 um den Wert O versetzt, der gleich (1,6 - 4) T_{D} ist, wobei gilt, dass die Länge des Oberteils D_{H1} größer als die Länge des Unterteils D_{D1} ist. Bestandteil der Dichtung 3 kann auch ein Distanzglied 7 sein. Dieser kann zwischen dem oberen 5 und unteren Dichtteil 6, eventuell über dem oberen Dichtteil 5 oder unter dem unteren Dichtteil 6 angeordnet sein. Die Stärke des Distanzgliedes T_{z} beträgt (0 - 7,2) T_{H},wobei der Versatz des Distanzgliedes Q_{z}gegenüber dem Oberteil des asymmetrischen Dichtprofils 9 den Wert (0 - 10) T_{H}hat. Die angeführten Werte gelten für die Dichtung im unbelasteten Zustand.

Nach dem Einlegen der Dichtung 3 zwischen den Zylinderkopf 1 und die Abgasanlage 2 des Verbrennungsmotors werden die Befestigungsschrauben (nicht abgebildet) angezogen, wodurch gleichzeitig das asymmetrische Dichtprofil 8 zusammengedrückt wird, wobei der Ausmaß seiner Komprimierung positiv durch das Distanzglied 7 beeinflusst werden kann. In diesem komprimierten Zustand bilden sich bei der vorliegenden Dichtung 3 dominante Dichtpunkte 15, 16, 17, 18 aus, welche die Qualität der Dichtung beeinflussen. Es handelt sich insbesondere um den äußeren oberen Dichtpunkt 15 und äußeren unteren Dichtpunkt 16, wo dominante Kontaktstellen mit erhöhtem Kontaktdruck entstehen, was sich aus der Neigung des schrägen kurzen Abschnitts 12 ergibt und dem Wert M_{H2} entspricht. Gleichzeitig wird eine optimale Abfederung im mittleren Dichtpunkt 17 erzielt. Durch die asymmetrische Anordnung des Anfangs des oberen und unteren Dichtteils 5, 6 um Wert O wird in dem versetzten Dichtpunkt 18 auch ein erhöhter Kontaktdruck erzielt.

### Bezugszeichenliste:

- 1: Zylinderkopf des Verbrennungsmotors
- 2: Abgasanlage des Verbrennungsmotors
- 3: Dichtung
- 4: durchgehende Öffnung
- 5: oberer Dichtteil
- 6: unterer Dichtteil
- 7: Distanzglied
- 8: asymmetrisches Dichtprofil
- 9: oberer Teil des asymmetrischen Dichtprofils
- 10: unterer Teil des asymmetrischen Dichtprofils
- 11: schräger langer Abschnitt
- 12: schräger kurzer Abschnitt
- 13: schräger Abschnitt
- 14: horizontaler Abschnitt
- 15: äußerer oberer Dichtpunkt
- 16: äußerer unterer Dichtpunkt
- 17: mittlerer Dichtpunkt
- 18: versetzter Dichtpunkt
- D_{H1}: Länge des Oberteils des asymmetrischen Dichtprofils
- D_{H2}: Länge des schrägen kurzen Abschnitts
- D_{D1}: Länge des unteren Teils des asymmetrischen Dichtprofils
- D_{D2}: Länge des horizontalen Abschnitts
- V_{H1}: Höhe des Oberteils des asymmetrischen Dichtprofils
- V_{H2}: Höhe des schrägen kurzen Abschnitts
- V_{D}: Höhe des Unterteils des asymmetrischen Dichtprofils
- O: Versatz
- O_{z}: Versatz des Distanzgliedes
- T_{H}: Stärke des oberen Dichtteils
- T_{D}: Stärke des unteren Dichtteils
- T_{z}: Stärke des Distanzgliedes

## Patentansprüche

1. Dichtung mit asymmetrischem Dichtprofil für gasdichten Verschluss der Spalte oder Fuge zwischen zwei zu verbindenden Teilen, gebildet durch einen oberen Dichtteil und einen unteren Dichtteil, wo die Dichtung eine durchgehende Öffnung aufweist, an deren Rändern ein asymmetrisches Dichtprofil ausgestaltet ist, das einen Ober- und einen Unterteil umfasst, **dadurch gekennzeichnet, dass** der Oberteil des asymmetrischen Dichtprofils (9) durch einen schrägen langen Abschnitt (11) und einen schrägen kurzen Abschnitt (12) gebildet ist und dass der untere Teil des asymmetrischen Dichtprofils (10) durch einen schrägen Abschnitt (13) und einen horizontalen Abschnitt (14) gebildet ist, wobei die Stärke des oberen Dichtteils (5) mit dem Wert (T_{H}) und die Stärke des unteren Dichtteils (6) mit dem Wert (T_{D}) definiert ist.

2. Dichtung mit asymmetrischem Dichtprofil nach Anspruch 1, **dadurch gekennzeichnet, dass** der Oberteil des asymmetrischen Dichtprofils (9) gegenüber dem Unterteil des asymmetrischen Dichtprofils (10) versetzt angeordnet ist, wo der Versatz (O) im Intervall (1,6 - 4) T_{D} liegt.

3. Dichtung mit asymmetrischem Dichtprofil nach Anspruch 1, **dadurch gekennzeichnet, dass** die Höhe des Oberteils (V_{H1}) des asymmetrischen Dichtprofils (8) im Intervall (1,6 - 3,6) T_{H} und die Höhe des Unterteils (V_{D}) des asymmetrischen Dichtprofils (8) im Intervall (1,6 - 3,6) T_{D} liegt.

4. Dichtung mit asymmetrischem Dichtprofil nach Anspruch 1, **dadurch gekennzeichnet, dass** die Höhe des schrägen kurzen Abschnitts (V_{H2}) gleich (0,6 - 1,4) T_{H} ist.

5. Dichtung mit asymmetrischem Dichtprofil nach Anspruch 1, **dadurch gekennzeichnet, dass** die Länge des Oberteils (D_{H1}) des asymmetrischen Dichtprofils (8) im Intervall (12 - 20) T_{H} liegt.

6. Dichtung mit asymmetrischem Dichtprofil nach Anspruch 1, **dadurch gekennzeichnet, dass** die Länge des schrägen kurzen Abschnitts (D_{H2}) im Intervall (5,6 - 7,6) T_{H} liegt.

7. Dichtung mit asymmetrischem Dichtprofil nach Anspruch 1, **dadurch gekennzeichnet, dass** die Länge des Unterteils (D_{D1}) des asymmetrischen Dichtprofils (8) im Intervall (12 - 18,4) T_{D} liegt.

8. Dichtung mit asymmetrischem Dichtprofil nach Anspruch 1, **dadurch gekennzeichnet, dass** die Länge des horizontalen Abschnitts (D_{D2}) des asymmetrischen Dichtprofils (8) im Intervall (4,8 - 6,8) T_{D} liegt.

9. Dichtung mit asymmetrischem Dichtprofil nach Ansprüchen 1 bis 8, **dadurch gekennzeichnet, dass** die Dichtung einen Distanzglied (7) mit einer Stärke (T_{z}) umfasst, die im Intervall (0 - 7,2) T_{H} liegt, wobei der Versatz des Distanzgliedes (O_{z}) gegenüber dem Oberteil des asymmetrischen Dichtprofils (9) einen Wert von (0 - 10) T_{H} hat.

10. Dichtung mit asymmetrischem Dichtprofil nach Anspruch 1, **dadurch gekennzeichnet, dass** die Stärke (T_{H}) mit der Stärke (T_{D}) nicht identisch sein muss.
